(19) **Europäisches Patentamt**

**European Patent Office**

**Office européen des brevets**

(11) **EP 1 374 381 B1**

(12) **EUROPÄISCHE PATENTSCHRIFT**

(45) Veröffentlichungstag und Bekanntmachung des Hinweises auf die Patenterteilung:
**22.09.2004 Patentblatt 2004/39**

(21) Anmeldenummer: **02724271.8**

(22) Anmeldetag: **04.04.2002**

(51) Int Cl.$^7$: **H02M 3/335**, H02M 3/337

(86) Internationale Anmeldenummer:
**PCT/EP2002/003745**

(87) Internationale Veröffentlichungsnummer:
**WO 2002/082626 (17.10.2002 Gazette 2002/42)**

(54) **VORRICHTUNG ZUR TRANSFORMATION EINER PRIMÄRSPANNUNG IN EINE SEKUNDÄRSPANNUNG MIT MINDESTENS EINEM SCHALTNETZTEIL**

DEVICE FOR TRANSFORMING A PRIMARY VOLTAGE INTO A SECONDARY VOLTAGE BY MEANS OF AT LEAST ONE SWITCHED-MODE POWER SUPPLY

DISPOSITIF POUR TRANSFORMER UNE TENSION PRIMAIRE EN UNE TENSION SECONDAIRE AU MOYEN D'AU MOINS UNE ALIMENTATION EN MODE COMMUTE

(84) Benannte Vertragsstaaten:
**AT BE CH CY DE DK ES FI FR GB GR IE IT LI LU MC NL PT SE TR**

(30) Priorität: **05.04.2001 EP 01108599**

(43) Veröffentlichungstag der Anmeldung:
**02.01.2004 Patentblatt 2004/01**

(73) Patentinhaber:
- **Institut für angewandte Biotechnik und Systemanalyse an der Universität Witten/Herdecke GmbH**
  **58455 Witten (DE)**
- **Fraunhofer-Gesellschaft zur Förderung der angewandten Forschung e.V.**
  **80636 München (DE)**

(72) Erfinder:
- **GENEISS, Volker**
  **59590 Geseke (DE)**
- **MIDDENDORF, Andreas**
  **13353 Berlin (DE)**
- **GRIESE, Hans-Jörg**
  **12205 Berlin (DE)**
- **WOLFF, Elmar**
  **58313 Herdecke (DE)**
- **GLOTZBACH, Ulrich**
  **58454 Witten (DE)**
- **FUNK, Traugott**
  **51429 Bergisch-Gladbach (DE)**

(74) Vertreter: **Hilleringmann, Jochen et al**
**Bahnhofsvorplatz 1,**
**Deichmannhaus**
**50667 Köln (DE)**

(56) Entgegenhaltungen:
**US-A- 5 910 886          US-B1- 6 178 099**

**Beschreibung**

Die Erfindung betrifft eine Vorrichtung zur Transformation einer Primärspannung in eine Sekundärspannung mit mindestens einem Schaltnetzteil, das auf dem Resonanzwandlerprinzip mit Phasenschieber beruht, wie z. B. aus US-A-6 178 099 und US-A-5 910 886 bekannt ist.

Schaltnetzteile sind grundsätzlich bekannt und werden in einer Vielzahl von Ausgestaltungen ausgeführt. Wie jeder elektrische Verbraucher verursachen auch Schaltnetzteile elektrische Verluste. Wegen der Fülle an Einsatzbereichen für Schaltnetzteile ist man bestrebt, die Verlustleistungen so gering wie möglich zu halten. Eine Möglichkeit zur Realisierung möglichst kleiner Verlustleistungen besteht darin, die Schaltnetzteile zu miniaturisieren.

Der Erfindung liegt die Aufgabe zu Grunde, ein Schaltnetzteil zur Transformation einer Primärspannung in eine Sekundärspannung zu schaffen, das sich durch eine extrem geringe Verlustleistung, eine effektive Energieübertragung und extrem kleine Abmessungen auszeichnet.

Zur Lösung dieser Aufgabe wird mit der Erfindung eine Vorrichtung zur Transformation einer Primärspannung in eine Sekundärspannung vorgeschlagen, wobei die Vorrichtung mindestens ein Schaltnetzteil aufweist, das versehen ist mit

- einem Gehäuse,
- einem eingangsseitigen Tiefpassfilter mit einer Induktivität und einer Kapazität,
- einer Transistorvollbrücken-Treiberschaltung mit einem mit dem Tiefpassfilter verbundenen Eingang und einem Ausgang,
- einer Steuereinheit zum Steuern der Transistorvollbrücken-Treiberschaltung, wobei die Steuereinheit einen Phasenschieber und einen mit diesem verbundenen Pulsgenerator aufweist, der seinerseits mit den Steuereingängen der Transistoren der Transistorvollbrücken-Treiberschaltung verbunden ist,
- einem Transformator mit einer Primär- und einer Sekundärwicklung und mit einem magnetischen Kopplungselement zur magnetischen Kopplung der Primär- und der Sekundärwicklung,
- einem den Ausgang der Transistorvollbrücken-Treiberschaltung mit der Primärwicklung des Transformators verbindenden Primärschwingkreis mit einer Resonanzfrequenz und einer Güte, wobei die Primärwicklung des Transformators Teil des Primärschwingkreises ist und der Primärschwingkreis unter Einschluss der Transistorvollbrücken-Treiberschaltung, der Verbindungsleitungen und der Primärwicklung des Transformators mindestens eine Kapazität und mindestens eine Induktivität aufweist,
- einer ausgangsseitigen Gleichrichterschaltung mit einem Eingang und einem Ausgang,
- einem die Sekundärwicklung des Transformators und den Eingang der ausgangsseitigen Gleichrichterschaltung verbindenden Sekundärschwingkreis mit einer Resonanzfrequenz und einer Güte, wobei die Sekundärwicklung des Transformators Teil des Sekundärschwingkreises ist und der Sekundärschwingkreis unter Einschluss der Gleichrichterschaltung, der Verbindungsleitungen und der Sekundärwicklung des Transformators eine Kapazität und eine Induktivität aufweist und wobei die Resonanzfrequenz des Primärschwingkreises im wesentlichen gleich der Resonanzfrequenz des Sekundärschwingkreises ist und die Güte des Primärschwingkreises an die Güte des Sekundärschwingkreises zur Minimierung der Differenz zwischen beiden angepasst ist,
- einem ausgangsseitigen Tiefpassfilter mit einer Induktivität und einer Kapazität,
- wobei die Induktivitäten der Tiefpassfilter magnetisch entkoppelt sind,
- einem Strom- und/oder Spannungssensor, der in den Primärschwingkreis geschaltet ist und ein Ausgangssignal an den Phasenschieber der Steuereinheit liefert, wobei

- die Steuereinheit, die Transistorvollbrücken-Treiberschaltung und der Strom- und/oder Spannungssensor als auf einem ersten Die integrierte Schaltungen und die Gleichrichterschaltung als auf einem zweiten Die integrierte Schaltung ausgeführt sind,
- das erste und das zweite Die auf einer Leiterplatte angeordnet sind, die die übrigen Schaltungselemente der Tiefpassfilter des Primär- und Sekundärschwingkreises und Verbindungsleitungen aufweist, deren Länge und Ausgestaltung zur Erzielung der Resonanzfrequenz und Güte der beiden Schwingkreise gewählt sind, und
- die Induktivitäten der Tiefpassfilter als magnetisch entkoppelte Teile. des Gehäuses ausgebildet sind.

Gemäß einer alternativen Ausgestaltung der Erfindung wird eine Vorrichtung mit mindestens einem Schaltnetzteil vorgeschlagen, das versehen ist mit

- einem Gehäuse,
- einem eingangsseitigen Tiefpassfilter mit einer Induktivität und einer Kapazität,
- einer Transistorvollbrücken-Treiberschaltung mit einem mit dem Tiefpassfilter verbundenen Eingang und einem Ausgang,
- einer Steuereinheit zum Steuern der Transistorvollbrücken-Treiberschaltung, wobei die Steuereinheit einen Phasenschieber und einen mit diesem verbundenen Pulsgenerator aufweist, der seinerseits mit den Steuereingängen der Transistoren der Transistorvollbrücken-Treiberschaltung verbunden ist,

- einem Transformator mit einer Primär- und einer Sekundärwicklung und mit einem magnetischen Kopplungselement zur magnetischen Kopplung der Primär- und der Sekundärwicklung,

- einem den Ausgang der Transistorvollbrücken-Treiberschaltung mit der Primärwicklung des Transformators verbindenden Primärschwingkreis mit einer Resonanzfrequenz und einer Güte, wobei die Primärwicklung des Transformators Teil des Primärschwingkreises ist und der Primärschwingkreis unter Einschluss der Transistorvollbrücken-Treiberschaltung, der Verbindungsleitungen und der Primärwicklung des Transformators mindestens eine Kapazität und mindestens eine Induktivität aufweist,

- einer ausgangsseitigen Gleichrichterschaltung mit einem Eingang und einem Ausgang,

- einem die Sekundärwicklung des Transformators und den Eingang der ausgangsseitigen Gleichrichterschaltung verbindenden Sekundärschwingkreis mit einer Resonanzfrequenz und einer Güte, wobei die Sekundärwicklung des Transformators Teil des Sekundärschwingkreises ist und der Sekundärschwingkreis unter Einschluss der Gleichrichterschaltung, der Verbindungsleitungen und der Sekundärwicklung des Transformators eine Kapazität und eine Induktivität aufweist und wobei die Resonanzfrequenz des Primärschwingkreises im wesentlichen gleich der Resonanzfrequenz des Sekundärschwingkreises ist und die Güte des Primärschwingkreises an die Güte des Sekundärschwingkreises zur Minimierung der Differenz zwischen beiden angepasst ist,

- einem ausgangsseitigen Tiefpassfilter mit einer Induktivität und einer Kapazität,

- wobei die Induktivitäten der Tiefpassfilter magnetisch entkoppelt sind,

- einem Strom- und/oder Spannungssensor, der zwischen der ausgangsseitigen Gleichrichterschaltung und dem ausgangsseitigen Tiefpassfilter geschaltet ist und der ein Ausgangssignal galvanisch entkoppelt an den Phasenschieber der Steuereinheit liefert, wobei

- die Steuereinheit und die Transistorvollbrücken-Treiberschaltung als auf einem ersten Die integrierte Schaltungen und die ausgangsseitige Gleichrichterschaltung und der Strom- und/oder Spannungssensor als auf einem zweiten Die integrierte Schaltungen ausgeführt sind,

- das erste und das zweite Die auf einer Leiterplatte angeordnet sind, die die übrigen Schaltungselemente der Tiefpassfilter des Primär- und Sekundärschwingkreises und Verbindungsleitungen aufweist, deren Länge und Ausgestaltung zur Erzielung der Resonanzfrequenz und Güte der beiden Schwingkreise gewählt sind, und

- die Induktivitäten der Tiefpassfilter als magnetisch entkoppelte Teile des Gehäuses ausgebildet sind.

Das erfindungsgemäße Schaltnetzteil arbeitet nach dem sogenannten Resonanzwandlerprinzip. Die Besonderheit besteht erfindungsgemäß jedoch darin, dass sowohl primärseitig als auch sekundärseitig des eigentlichen Transformators in Resonanz schwingende Schwingkreise vorgesehen sind. Diese Schwingkreise sind unter Berücksichtigung ihrer Zu- und Verbindungsleitungen und insbesondere unter Berücksichtigung der durch diese Leitungen verursachten parasitären Kapazitäten und Induktivitäten ausgelegt. Die Primär- und die Sekundärwicklung des Transformators sind ebenfalls Bestandteil des Primär- und des Sekundärschwingkreises.

Beide Schwingkreise weisen im wesentlichen die gleiche Resonanzfrequenz auf. Idealerweise sind die Resonanzfrequenzen identisch. Auch die Güten der beiden Schwingkreise sind im wesentlichen gleich. Da das Übertragungsverhältnis des Transformators von dem Verhältnis 1:1 logischerweise abweicht, können die Güten beider Schwingkreise nicht exakt gleich sein. Erfindungsgemäß ist hier vorgesehen, dass die Differenz zwischen den Güten beider Schwingkreise so klein wie möglich ist.

Eingangs- und ausgangsseitig des erfindungsgemäßen Schaltnetzteils befinden sich Tiefpassfilter, deren Induktivitäten magnetisch entkoppelt sind. Der Ausgang des eingangsseitigen Tiefpassfilters ist mit einer Treiberschaltung verbunden, bei der es sich um eine Transistorvollbrückenschaltung handelt. Die einzelnen Transistoren dieser Treiberschaltung sind über eine Regeleinrichtung angesteuert. Diese Regeleinrichtung weist einen Pulsgenerator auf, der die Ansteuerimpulse für die einzelnen Transistoren erzeugt. Die Phasenlage dieser Ansteuerungsimpulse wird durch einen Phasenschieber der Regeleinheit erzeugt. Dieser Phasenschieber erhält von einem Strom- und/oder Spannungssensor ein Eingangssignal. Über diesen Sensor wird sensiert, welcher Strom bzw. welche Spannung aktuell am Ausgang des Schaltnetzteils gegeben ist.

Ausgangsseitig befindet sich vor dem Tiefpassfilter eine Gleichrichterschaltung. Während die Transistorvollbrücken-Treiberschaltung Bestandteil des Primärschwingkreises ist, ist die Gleichrichterschaltung Bestandteil des Sekundärschwingkreises. Beide Schwingkreise sind über das magnetische Kopplungselement des Transformators gekoppelt. Die Kapazitäten und Induktivitäten beider Schwingkreise sind unter Einschluss der Primär- und Sekundärwicklungen des Transformators, der Länge und Ausgestaltung der Zuleitungen sowie Verbindungsleitungen der einzelnen Elemente der Schwingkreise und der Elemente der Treiberschaltung bzw. der Gleichrichterschaltung ausgelegt.

Das Gehäuse des erfindungsgemäßen Schaltnetzteils wird zumindest teilweise von den magnetischen Elementen der Induktivitäten der beiden Tiefpassfilter gebildet. Diese Teile des Gehäuses sind magnetisch entkoppelt. Vorteilhafterweise ist das Gehäuse zweiteilig aufgebaut, wobei jeder Teil magnetisch mit jeweils einem der beiden Tiefpassfilter gekoppelt ist und beide Gehäuseteile untereinander wiederum entkoppelt sind. Ein derartiges Gehäuse aus Metall (in diesem Fall insbesondere ferromagnetischem Material) ist im Hinblick auf die elektromagnetische Verträglichkeit von Vorteil.

Zur Ansteuerung der Transistoren der Treiberschaltung werden zweckmäßigerweise Dirac-Impulse oder gaussfunktionsartige, e-funktionsartige oder kosinusquadratfunktionsartige Impulse verwendet. Sämtliche dieser Impulsformen können verwendet werden, sofern der Primärschwingkreis als Parallelschwingkreis bzw. in Serienausführung vorliegt.

Durch eine entsprechend hohe Taktung der Transistoren der Vollbrückentreiberschaltung ist es möglich, auf eine eingangsseitige Gleichrichterschaltung zu verzichten. Die Taktfrequenz ist dabei zweckmäßigerweise größer als einige kHz und insbesondere größer als 500 kHz, vorzugsweise größer als 1 MHz. Bei diesen Frequenzen kann wie gesagt auf eine Gleichrichtung am Eingang verzichtet werden. Damit ist auch ein Verzicht auf voluminöse primärseitige Kondensatoren, wie sie für die Gleichrichtung normalerweise benötigt werden, möglich.

Der Transformator weist eine Primärwicklung und eine Sekundärwicklung auf. Diese Wicklungen können in Dünnschichttechnik oder auch als Drahtwicklungen ausgeführt sein. Der magnetische Kreis des Transformators, der vorzugsweise als Planartransformator ausgeführt ist, wird jeweils über ein insbesondere ferromagnetisches Material geschlossen.

Ein weiteres wesentliches Merkmal der Erfindung besteht in der konsequenten Anwendung der Mikrointegrationstechnik. Dementsprechend sind die integrierten Schaltungen selbst nicht gehäust, vielmehr sind die Dies (ungehäustes IC) direkt auf eine Leiterplatte z. B. Flip-Chip- oder Chip-on-Board-Technologie aufgebracht und mit den Leiterbahnen verbondet. Alternativ kann man auch gehäuste Dies verwenden, die dann jedoch vorzugsweise in Chip-Scale-Package-Technik realisiert sind. Mit all diesen IC-Technologien werden parasitäre Einflüsse herkömmlicher IC-Gehäuse vermieden. Die Länge und die Ausgestaltung der Leiterbahnen auf der Leiterplatte sind entsprechend der gewünschten Resonanzfrequenz und den Güten der beiden Schwingkreise gewählt. Die Leiterplatte kann starr, flexibel oder in Starr-Flex-Technik ausgeführt sein.

Sofern der Strom- und/oder Spannungssensor sekundärseitig angeordnet ist, wird sein Ausgangssignal galvanisch entkoppelt dem Phasenschieber zugeführt. Dies erfolgt beispielsweise über einen Optokoppler.

Auf die galvanische Trennung kann dann verzichtet werden, wenn der Sensor primärseitig verschaltet ist. In diesem Fall ist er Teil des Primärschwingkreises.

Die Erfindung wird nachfolgend anhand der Zeichnung näher erläutert. Hierbei zeigen im einzelnen:

Fig. 1            die elektrische Beschaltung des erfindungsgemäßen Schaltnetzteils,

Fign. 2 und 3    perspektivische Ansichten einer flexiblen Leiterplatte mit Planartransformator in Drauf- und Unteransicht,

Fig. 4            den Planartransformator in Seitenansicht mit gegensinnig an seinen Enden umgelegter Leiterplatte,

Fig. 5            einen Schnitt durch das Gehäuse des Schaltnetzteils, und

Fig. 6            eine alternative elektrische Beschaltung für das Schaltnetzteil.

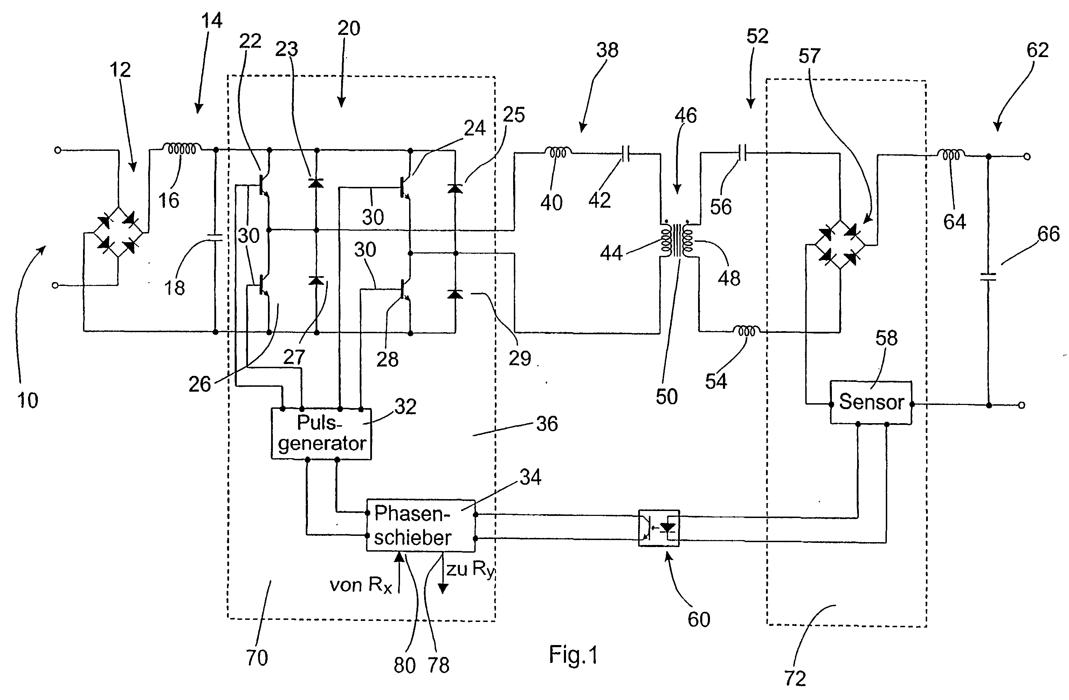

In Fig. 1 ist die elektrische Schaltung des Schaltnetzteils dargestellt, das für DC/DC, DC/AC, AC/DC oder AC/AC-Wandlung einsetzbar ist. Am Eingang 10 des Schaltnetzteils befindet sich eine optionale Gleichrichterschaltung 12, die als Diodenvollbrücke ausgeführt ist. Mit dem Ausgang dieses Gleichrichters 12 ist ein erstes Tiefpassfilter 14 mit einer Induktivität 16 und einer Kapazität 18 verbunden. Parallel zur Kapazität 18 befindet sich eine Transistorvollbrücken-Treiberschaltung 20, die aus vier Transistoren 22,24,26,28 mit zu diesen parallel geschalteten Dioden 23,25,27,29 besteht. Die Steueranschlüsse 30 der Transistoren 22-28 sind mit einem Pulsgenerator 32 verbunden, der von einem Phasenschieber 34 Eingangssignale erhält. Der Pulsgenerator 32 und der Phasenschieber 34 bilden zusammen eine Regeleinheit 36 zur Steuerung der Treiberschaltung 20 dergestalt, dass am Ausgang des Schaltnetzteils die gewünschte Leistung zur Verfügung steht.

Der Brückenzweig der Treiberschaltung 20 ist mit einem Primärschwingkreis 38 verbunden, der eine Induktivität 40 und eine Kapazität 42 aufweist und als Serienschwingkreis ausgebildet ist. Teil dieses Primärschwingkreises 38 ist aber auch die Primärwicklung 44 eines Transformators 46, der darüber hinaus eine Sekundärwicklung 48 und ein magnetisches Kopplungselement 50 aufweist.

Die Sekundärwicklung 48 des Transformators 46 ist Bestandteil eines Sekundärschwingkreises 52, der darüber hinaus noch eine Induktivität 54 und eine Kapazität 56 aufweist und mit dem der Eingang einer ausgangsseitigen Gleichrichterschaltung 57 verbunden ist. Diese Gleichrichterschaltung 57 ist ebenfalls als Diodenvollbrücke ausgebildet und weist in ihrem Ausgangszweig einen Strom- bzw. Spannungssensor 58 auf. Der Sensor 58 gibt über einen Optokoppler 60 ein die sensierte Größe (Strom und/oder Spannung) repräsentierendes Ausgangssignal an den Phasenschieber 34 der Regeleinheit 36 ab. Hinter dem Sensor 58 befindet sich ein ausgangsseitiges Tiefpassfilter 62 mit einer Induktivität 64 und einer Kapazität 66.

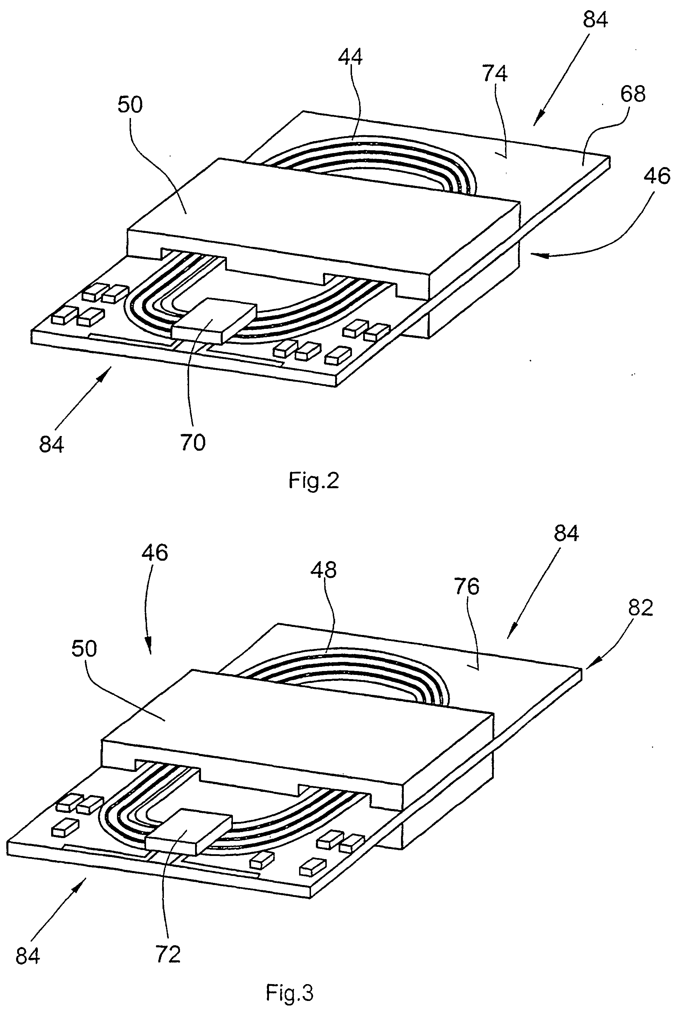

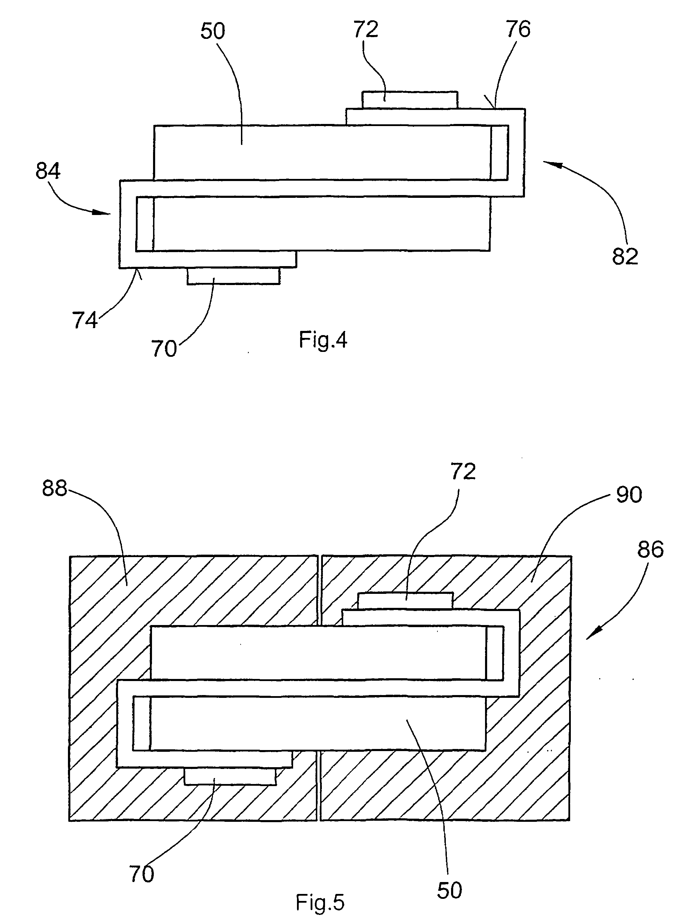

Wie man anhand der Fig. 1 erkennen kann, arbeitet das Schaltnetzteil mit einem Resonanzwandler. Die Besonderheit dieses Resonanzwandlers besteht darin, dass beide Schwingkreise 38,52 die gleiche bzw. im wesentlichen die gleiche Resonanzfrequenz aufweisen. Die Induktivitäten und Kapazitäten der beiden Schwingkreise 38,52 sowie die Wicklungen 44 und 48 des Transformators 46 sind auf einer Leiterplatte 68 (siehe Fign. 2 bis 5) angeordnet. Die Leiterbahnen auf dieser Leiterplatte 68 sind von ihrer Ausgestaltung und Länge derart konzipiert, dass die von ihnen verursachten parasitären Effekte (Induktivität und Kapazität) sich dergestalt einstellen, dass beide Schwingkreise 38,52 die gleiche Resonanzfrequenz aufweisen. In diese Überlegungen gehen auch die Halbleiterbauelemente der Transistorvollbrücken-Treiberschaltung 20 und der Gleichrichterschaltung 57 mit ein. Möglich wird all dies durch die Anwendung der Mikrointegrationstechnologie und dadurch, dass die elektronischen Komponenten des Schaltnetzteils auf zwei Die 70,72 aufgeteilt sind, wie es ebenfalls der Fig. 1 zu entnehmen ist. Das erste Die 70 umfasst dabei die Regeleinheit 36 und die Treiberschaltung 20, während das zweite Die 72 die Gleichrichterschaltung 57 und den Sensor 58 umfasst.

Diese beiden Dies 70,72 sind in BGA-Technik realisiert und direkt auf die Leiterplatte 68 gelötet oder geklebt (Flip-Chip-Technologie), und zwar zum einen auf die Oberseite 74 und zum anderen auf die Unterseite 76 der Leiterplatte 68 (siehe Fign. 2 und 3). Alternative Techniken sind Bonden, z. B. TAB.

Durch die Mikrointegration ist es möglich, die Resonanzfrequenzen beider Schwingkreise -unter Einbeziehung der Leiterbahn-Ausgestaltungen und Bauteile durch Simulation und Design auf den gleichen Wert auszulegen. Auf Grund des Übersetzungsverhältnisses des Transformators 46 ist ein vollständiger Abgleich der Güten beider Schwingkreise 38,52 nicht möglich. Idealerweise sollten diese beiden Güten ebenfalls identisch sein, was man durch eine entsprechende Wahl der Dimensionierung und Auslegung der einzelnen Bauelemente realisieren kann. Ziel des Schaltungsentwurfs ist es daher, die Güten so weit wie möglich aneinander anzunähern. Damit ergibt sich dann insgesamt eine nahezu optimale und weitestgehend verlustfreie Energieübertragung vom Primärschwingkreis 38 auf den Sekundärschwingkreis 52.

Wie anhand von Fig. 1 zu erkennen ist, weist der Phasenschieber 34 noch einen weiteren Ausgang 78 und einen weiteren Eingang 80 auf. Über diese Ein- und Ausgänge 78,80 lässt sich die Regeleinheit 36 des in Fig. 1 gezeigten Schaltnetzteils mit einem anderen Schaltnetzteil verbinden. Hierdurch entsteht ein schaltungstechnisch modularer Aufbau, der es ermöglicht, mehrere Schaltnetzteile miteinander zu kombinieren, um bestimmte Ausgangsspannungen oder -ströme realisieren zu können.

Zur Ansteuerung der Transistoren 22,24,26 und 28 werden bevorzugt Dirac-Impulse insbesondere 2. Ordnung bzw. Dirac-Doppelimpulse oder Impulse verwendet, deren Form sich gemäß einer der nachfolgend angegebenen Gleichungen beschreiben lässt:

$$f(x) = a\, e^{-bx^2}$$

$$f(x) = a\cos^2(bx)$$

$$f(x) = a\, \sin x/x$$

Diese Impulse werden mit einer Frequenz von größer 500kHz und insbesondere mit einer Frequenz im MHz-Bereich erzeugt. Bei einer derartig hohen Schaltfrequenz ist eine Gleichrichtung der Eingangsspannung, wie sie bei der Schaltung gemäß Fig. 1 in Form der Gleichrichterschaltung 12 vorgesehen ist, nicht erforderlich. Insoweit ist die Gleichrichterschaltung 12 nicht notwendigerweise Bestandteil des hier beschriebenen Schaltnetzteils.

Durch die Vermeidung scharfkantiger Impulse wird das Entstehen von Überschwingern und damit das Entstehen von Oberwellen weitgehend vermieden, was im Hinblick auf EMV und die Effizienz der Energieübertragung von Vorteil ist.

Der Aufbau des Schaltnetzteils in Mikrointegrationstechnologie ist in den Fign. 2-5 wiedergegeben. Dort ist auch zu erkennen, dass der Transformator 46 als sogenannter Planartransformator in Dünnschichttechnik aufgebaut ist. Hierbei sind die Primär- und Sekundärwicklungen 44,48 als z. B. runde, ovale, elliptische, rechteckige spiralförmig verlaufende Leiterbahnen der Leiterplatte 68 ausgebildet, wobei die Leiterbahnen der Primärwicklung 44 auf der Oberseite 74 und die Leiterbahnen der Sekundärwicklung 48 auf der Unterseite 76 der Leiterplatte 68 ausgebildet sind. Die spiralförmigen Leiterbahnen von Primär- und Sekundärwicklung 44,48 sind durch das magnetische Kopplungselement 50 umschlossen, das sich ober- und unterhalb der Leiterplatte 68 erstreckt. Die Leiterplatte 68 ist vorzugsweise durchgehend flexibel gestaltet und an ihren seitlich aus dem Kopplungselement 50 vorstehenden Enden 82,84 gegensinnig um das magnetische Kopplungselement 50 des Transformators 46 gelegt. Das magnetische Kopplungselement 50 besteht aus einem hartmagnetischen Material, wie beispielsweise ferromagnetischem Material bzw. einem Ferritmaterial.

Die zuvor beschriebene Struktur gemäß den Fign. 2 bis 4 bildet den Kern eines in diesem Fall zweiteiligen Gehäuses 86, dessen beide Hälften 88,90 aus in diesem Fall weichmagnetischem Material bestehen und Bestandteil der Induktivitäten 16 bzw. 64 der beiden Tiefpassfilter 14 und 62 und damit auch in Teilen Bestandteil des magnetischen Kreises des Transformators 46 sind. Die beiden Gehäuseteile 88,90 sind magnetisch entkoppelt. Sie geben dem Gehäuse 86 eine stabile Form und Ausgestaltung. Das Gehäuse 86 mit Transformator 46 bildet eine kraftschlüssige Einheit, indem das Gehäuse 86 den Transformator 46 formschlüssig umgibt.

Mit der zuvor beschriebenen Mikrointegrationstechnik lässt sich das Schaltnetzteil mit Subzentimeterdimensionen fertigen. Damit lässt sich das Schaltnetzteil dergestalt konzipieren, dass es in einem separaten Gehäuse direkt in der Steckdose, im Gehäuse des zu versorgenden Geräts (on-board) oder auch in der Zuleitung des zu versorgenden Geräts untergebracht werden kann. Das Schaltnetzteil ist insbesondere geeignet zur Stromversorgung im Kleinleistungsbereich, wie beispielsweise für die Akkuladung im Bereich Telefonie, für Werkzeuge und Spielzeuge.

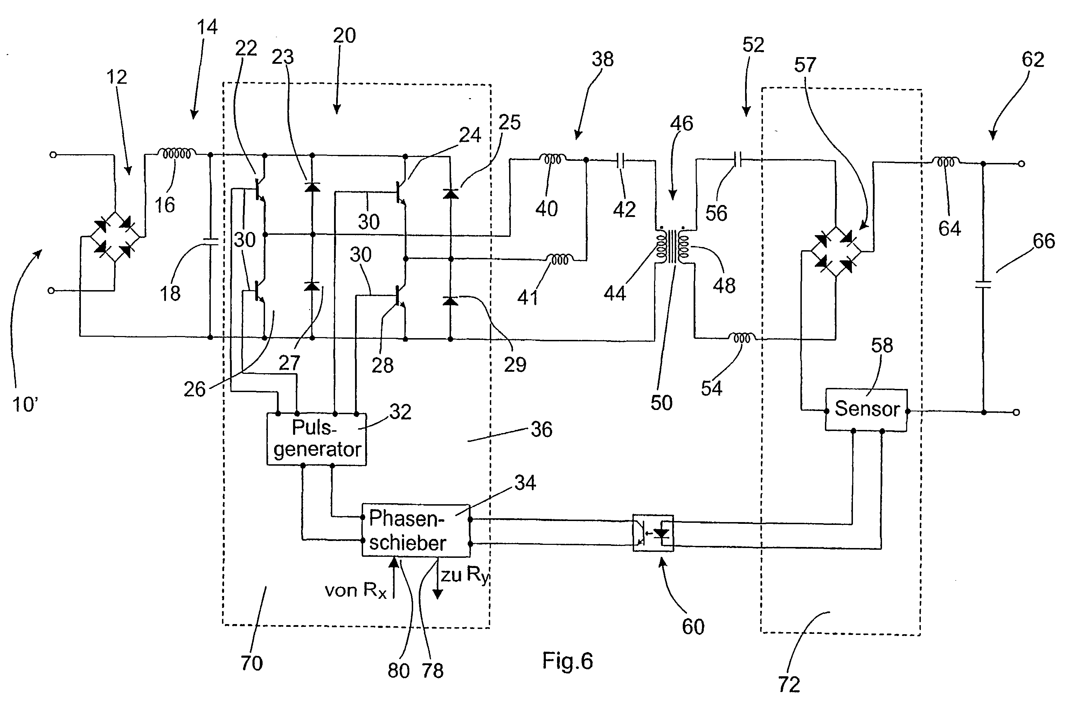

Fig. 6 zeigt ein alternatives Schaltbild eines Schaltnetzteils 10', das mit Ausnahme des Primärschwingkreises 38 identisch mit dem Schaltbild des Ausführungsbeispiels gemäß Fig. 1 ist, weshalb in Fig. 6 für bau- und/oder funktionsgleiche Bestandteile die gleichen Bezugszeichen verwendet sind.

Im Brückenzweig der Transistorvollbrücken-Treiberschaltung 20 befindet sich gemäß Fig. 6 eine Reihenschaltung aus zwei Induktivitäten 40 und 41, deren gemeinsamer Schaltungsknoten mit der Kapazität 42 verbunden ist. Der Schwingkreis 38 wird über die Primärwicklung 44 zum gemeinsamen Schaltungsknoten der beiden Transistoren 26,28 der Transistorvollbrücken-Treiberschaltung 20 geschlossen. Durch dieses Schaltungskonzept des Primärschwingkreises wird erreicht, dass immer eine Verbindung der Schwingkreise zum definierten Potential (in diesem Fall Massepotential) existiert. Damit werden Spannungsüberhöhungen, wie sie bei der Schaltung von Fig. 1 entstehen können, wenn sämtliche Transistoren 22 bis 28 sperren, abgeführt.

**Patentansprüche**

1. Vorrichtung zur Transformation einer Primärspannung in eine Sekundärspannung, mit mindestens einem Schaltnetzteil (10,10'), das versehen ist mit

   - einem Gehäuse (86),
   - einem eingangsseitigen Tiefpassfilter (14) mit einer Induktivität (16) und einer Kapazität (18),
   - einer Transistorvollbrücken-Treiberschaltung (20) mit einem mit dem Tiefpassfilter (14) verbundenen Eingang und einem Ausgang;
   - einer Steuereinheit (36) zum Steuern der Transistorvollbrücken-Treiberschaltung (20), wobei die Steuereinheit (36) einen Phasenschieber (34) und einen mit diesem verbundenen Pulsgenerator (32) aufweist, der seinerseits mit den Steuereingängen (30) der Transistoren (22,24,26,28) der Transistorvollbrücken-Treiberschaltung verbunden ist,

   - einem Transformator (46) mit einer Primär- und einer Sekundärwicklung (44,48) und mit einem magnetischen Kopplungselement (50) zur magnetischen Kopplung der Primär- und der Sekundärwicklung (44,48),
   - einem den Ausgang der Transistorvollbrücken-Treiberschaltung (20) mit der Primärwicklung (44) des Transformators (46) verbindenden Primärschwingkreis (38) mit einer Resonanzfrequenz und einer Güte, wobei die Primärwicklung (44) des Transformators (46) Teil des Primärschwingkreises (38) ist und der Primärschwingkreis (38) unter Einschluss der Transistorvollbrücken-Treiberschaltung (20), der Verbindungsleitungen und der Primärwicklung (44) des Transformators (46) mindestens eine Kapazität und mindestens eine Induktivität aufweist,
   - einer ausgangsseitigen Gleichrichterschaltung (57) mit einem Eingang und einem Ausgang,
   - einem die Sekundärwicklung (48) des Transformators (46) und den Eingang der ausgangsseitigen Gleichrichterschaltung (57) verbindenden Sekundärschwingkreis (52) mit einer Resonanzfrequenz und einer Güte, wobei die Sekundärwicklung (48) des Transformators (46) Teil des Sekundärschwingkreises (52) ist und der Sekundärschwingkreis (52) unter Einschluss der Gleichrichterschaltung (57), der Verbindungsleitungen und der Sekundärwicklung (48) des Transformators (46) eine Kapazität und eine Induktivität aufweist und wobei die Resonanzfrequenz des Primärschwingkreises (38) im wesentlichen gleich der Resonanzfrequenz des Sekundärschwingkreises (52) ist und die Güte des Primärschwingkreises (38) an die Güte des Sekundärschwingkreises (52) zur Minimierung der Differenz zwischen beiden angepasst ist,
   - einem ausgangsseitigen Tiefpassfilter (62) mit einer Induktivität (64) und einer Kapazität (66),
   - wobei die Induktivitäten (16,64) der Tiefpassfilter (14,62) magnetisch entkoppelt sind,
   - einem Strom- und/oder Spannungssensor (58), der in den Primärschwingkreis (38) geschaltet ist und ein Ausgangssignal an den. Phasenschieber (34) der Steuereinheit (36) liefert, wobei
   - die Steuereinheit (36), die Transistorvollbrücken-Treiberschaltung (20) und der Strom- und/oder Spannungssensor (58) als auf einem ersten Die (70) integrierte Schaltungen und die Gleichrichterschaltung (57) als auf einem zweiten Die (72) integrierte Schaltung ausgeführt sind,

- das erste und das zweite Die (70,72) auf einer Leiterplatte (68) angeordnet sind, die die übrigen Schaltungselemente der Tiefpassfilter (14,62) des Primär- und Sekundärschwingkreises (38,52) und Verbindungsleitungen aufweist, deren Länge und Ausgestaltung zur Definition der Resonanzfrequenz und Güte der beiden Schwingkreise (38,52) gewählt sind, und

- die Induktivitäten (16,64) der Tiefpassfilter (14,62) als magnetisch entkoppelte Teile (88,90) des Gehäuses (86) ausgebildet sind.

2. Vorrichtung zur Transformation einer Primärspannung in eine Sekundärspannung mit mindestens einem Schaltnetzteil, das versehen ist mit

 - einem Gehäuse (86),
 - einem eingangsseitigen Tiefpassfilter (14) mit einer Induktivität (16) und einer Kapazität (18),
 - einer Transistorvollbrücken-Treiberschaltung (20) mit einem mit dem Tiefpassfilter (14) verbundenen Eingang und einem Ausgang,
 - einer Steuereinheit (36) zum Steuern der Transistorvollbrücken-Treiberschaltung (20), wobei die Steuereinheit (36) einen Phasenschieber (34) und einen mit diesem verbundenen Pulsgenerator (32) aufweist, der seinerseits mit den Steuereingängen (30) der Transistoren (22,24,26,28) der Transistorvollbrücken-Treiberschaltung verbunden ist,
 - einem Transformator (46) mit einer Primär- und einer Sekundärwicklung (44,48) und mit einem magnetischen Kopplungselement (50) zur magnetischen Kopplung der Primär- und der Sekundärwicklung (44,48),
 - einem den Ausgang der Transistorvollbrücken-Treiberschaltung (20) mit der Primärwicklung (44) des Transformators (46) verbindenden Primärschwingkreis (38) mit einer Resonanzfrequenz und einer Güte, wobei die Primärwicklung (44) des Transformators (46) Teil des Primärschwingkreises (38) ist und der Primärschwingkreis (38) unter Einschluss der Transistorvollbrücken-Treiberschaltung (20), der Verbindungsleitungen und der Primärwicklung (44) des Transformators (46) mindestens eine Kapazität und mindestens eine Induktivität aufweist,
 - einer ausgangsseitigen Gleichrichterschaltung (57) mit einem Eingang und einem Ausgang,
 - einem die Sekundärwicklung (48) des Transformators (46) und den Eingang der ausgangsseitigen Gleichrichterschaltung (57) verbindenden Sekundärschwingkreis (52) mit einer Resonanzfrequenz und einer Güte, wobei die Sekundärwicklung (48) des Transformators (46) Teil des Sekundärschwingkreises (52) ist und der Sekundärschwingkreis (52) unter Einschluss der Gleichrichterschaltung (57), der Verbindungsleitungen und der Sekundärwicklung (48) des Transformators (46) mindestens eine Kapazität und mindestens eine Induktivität aufweist und wobei die Resonanzfrequenz des Primärschwingkreises (38) im wesentlichen gleich der Resonanzfrequenz des Sekundärschwingkreises (52) ist und die Güte des Primärschwingkreises (38) an die Güte des Sekundärschwingkreises (52) zur Minimierung der Differenz zwischen beiden angepasst ist,

- einem ausgangsseitigen Tiefpassfilter (62) mit einer Induktivität (64) und einer Kapazität (66),

- wobei die Induktivitäten (16,64) der Tiefpassfilter (14,62) magnetisch entkoppelt sind,

- einem Strom- und/oder Spannungssensor (58), der zwischen der ausgangsseitigen Gleichrichterschaltung (57) und dem ausgangsseitigen Tiefpassfilter (62) geschaltet ist und der ein Ausgangssignal galvanisch entkoppelt an den Phasenschieber (34) der Steuereinheit (36) liefert, wobei

- die Steuereinheit (36) und die Transistorvollbrücken-Treiberschaltung (20) als auf einem ersten Die (70) integrierte Schaltungen und die ausgangsseitige Gleichrichterschaltung (57) und der Strom- und/oder Spannungssensor (58) als auf einem zweiten Die (72) integrierte Schaltungen ausgeführt sind,

- das erste und das zweite Die (70,72) auf einer Leiterplatte (68) angeordnet sind, die die übrigen Schaltungselemente der Tiefpassfilter (14,62) des Primär- und Sekundärschwingkreises (38,52) und Verbindungsleitungen aufweist, deren Länge und Ausgestaltung zur Definition der Resonanzfrequenz und Güte der beiden Schwingkreise (38,52) gewählt sind, und

- die Induktivitäten (16,64) der Tiefpassfilter (14,62) als magnetisch entkoppelte Teile (88,90) des Gehäuses (86) ausgebildet sind.

3. Vorrichtung nach Anspruch 2, **dadurch gekennzeichnet, dass** zur galvanischen Entkopplung des Ausgangssignals des Strom- und/oder Spannungssensors (58) ein Optokoppler (60) vorgesehen ist.

4. Vorrichtung nach einem der Ansprüche 1 bis 3, **dadurch gekennzeichnet, dass** sämtliche übrigen Schaltungselemente innerhalb des Gehäuses (86) angeordnet sind.

5. Vorrichtung nach einem der Ansprüche 1 bis 4, **dadurch gekennzeichnet, dass** die Induktivitäten (16,64) der Tiefpassfilter (14,62) und das magnetische Kopplungselement (50) des Transformators (46) ferromagnetische Materialien und insbesondere Ferrite aufweisen.

6. Vorrichtung nach einem der Ansprüche 1 bis 5, **dadurch gekennzeichnet, dass** der Pulsgenerator (32) diracförmige, gaußfunktionsförmige, e-funktionsförmige oder kosinusquadratfunktionsförmige Impulse zur Ansteuerung der Transistorvollbrücken-Treiberschaltung (20) erzeugt.

7. Vorrichtung nach einem der Ansprüche 1 bis 6, **dadurch gekennzeichnet, dass** die Ansteuerungsimpulse des Pulsgenerators (32) eine Frequenz von mehreren kHz, insbesondere größer als 500 kHz, und vorzugsweise im MHz-Bereich aufweisen.

8. Vorrichtung nach einem der Ansprüche 1 bis 7, **dadurch gekennzeichnet, dass** der Transformator (46) als Planartransformator ausgeführt ist und zwei als spiralförmige Leiterbahnen auf der oder einer Leiterplatte (68) ausgebildete Wicklungen (44,48) aufweist, die das magnetische Kopplungselement (50) kreuzen und insbesondere das als Ring ausgebildete magnetische Kopplungselement (50) durchdringen.

9. Vorrichtung nach einem der Ansprüche 1 bis 8, **dadurch gekennzeichnet, dass** die Leiterplatte (68) flexibel ist und zwei über das magnetische Kopplungselement (50) überstehende Enden (82,84) aufweist, die auf einander gegenüberliegenden Seiten der Leiterplatte (68) das erste und das zweite Die (70,72) sowie andere elektrische Bauelemente aufweisen und die gegensinnig um das magnetische Kopplungselement (50) gelegt sind.

10. Vorrichtung nach Anspruch 8 und 9, **dadurch gekennzeichnet, dass** die eine spiralförmige Wicklung auf der einen und die andere spiralförmige Wicklung auf der anderen Seite (74,76) der Leiterplatte (68) angeordnet ist.

11. Vorrichtung nach einem der Ansprüche 1 bis 10, **dadurch gekennzeichnet, dass** eingangsseitig eine Gleichrichterschaltung (12) vorgesehen ist, deren Ausgang mit dem eingangsseitigen Tiefpassfilter (14) verbunden ist.

12. Vorrichtung nach einem der Ansprüche 1 bis 11, **dadurch gekennzeichnet, dass** der Phasenschieber (34) der Steuereinheit (36) einen Ausgang (78) und einen Eingang (80) zur Verbindung mit dem Phasenschieber (34) der Steuereinheit (36) mindestens eines weiteren Schaltnetzteils aufweist.

13. Vorrichtung nach einem der Ansprüche 1 bis 12, **da-**

**durch gekennzeichnet, dass** der Primärschwingkreis (38) zwei in Reihe geschaltete Induktivitäten (40,41) aufweist, deren gemeinsamer Schaltungsknoten mit der Kapazität (42) verbunden ist.

14. Vorrichtung nach einem der Ansprüche 1 bis 13, **dadurch gekennzeichnet, dass** mehrere Schaltnetzteile (10,10') vorgesehen sind, die eingangsund/oder ausgangsseitig parallel und/oder in Reihe geschaltet sind und deren Steuereinheiten (36) zur gemeinsamen und aufeinander abgestimmten Steuerung der Transistorvollbrücken-Treiberschaltungen (20) untereinander verbunden sind.

## Claims

1. Device for transforming a primary voltage into a secondary voltage using at least one switched-mode power supply unit (10,10') which is provided with

   - a housing (86),
   - an input-side low-pass filter (14) comprising an inductor (16) and a capacitor (18),
   - a transistor full-bridge driver circuit (20) comprising an input connected with the low-pass filter (14) and an output;
   - a control unit (36) for controlling the transistor full-bridge driver circuit (20), wherein the control unit (36) comprises a phase shifter (34) and a pulse generator (32) connected thereto which, in turn, is connected with the control inputs (30) of the transistors (22,24,26,28) of the transistor full-bridge driver circuit,
   - a transformer (46) comprising a primary and a secondary winding (44,48) and a magnetic coupling element (50) for magnetically coupling the primary and the secondary winding (44,48),
   - a primary oscillating circuit (38), with a resonance frequency and a quality factor, connecting the output of the transistor full-bridge driver circuit (20) with the primary winding (44) of the transformer (46), wherein the primary winding (44) of the transformer (46) forms part of the primary oscillating circuit (38), and the primary oscillating circuit (38), together with the transistor full-bridge driver circuit (20), the connecting lines and the primary winding (44) of the transformer (46), comprises at least one capacitor and at least one inductor,
   - an output-side rectifier circuit (57) comprising an input and an output,
   - a secondary oscillating circuit (52), with a resonance frequency and a quality factor, connecting the secondary winding (48) of the transformer (46) and the input of the output-side rectifier circuit (57), wherein the secondary winding (48) of the transformer (46) forms part of the secondary oscillating circuit (52), and the secondary oscillating circuit (52), together with the rectifier circuit (57), the connecting lines and the secondary winding (48) of the transformer (46), comprises one capacitor and one inductor, and wherein the resonance frequency of the primary oscillating circuit (38) is substantially equal to the resonance frequency of the secondary oscillating circuit (52), and the quality factor of the primary oscillating circuit (38) is adapted to the quality factor of the secondary oscillating circuit (52) for minimizing the difference therebetween,

- an output-side low-pass filter (62) comprising an inductor (64) and a capacitor (66),
- wherein the inductors (16,64) of the low-pass filters (14,62) are magnetically decoupled,
- a current and/or voltage sensor (58) connected into the primary oscillating circuit (38) and supplying an output signal to the phase shifter (34) of the control unit (36), wherein
- the control unit (36), the transistor full-bridge driver circuit (20) and the current and/or voltage sensor (58) are configured as circuits integrated in a first die (70), and the rectifier circuit (57) is configured as a circuit integrated in a second die (72),
- the first and the second die (70,72) are arranged on a circuit board (68) including the remaining circuit elements of the low-pass filters (14,62) of the primary and the secondary oscillating circuit (38,52) and connecting lines whose length and configuration are selected in view of defining the resonance frequency and the quality factor of the two oscillating circuits (38,52), and
- the inductors (16,64) of the low-pass filters (14,62) are configured as magnetically decoupled parts (88,90) of the housing (86).

2. Device for transforming a primary voltage into a secondary voltage using at least one switched-mode power supply unit which is provided with

- a housing (86),
- an input-side low-pass filter (14) comprising an inductor (16) and a capacitor (18),
- a transistor full-bridge driver circuit (20) comprising an input connected with the low-pass filter (14) and an output;
- a control unit (36) for controlling the transistor full-bridge driver circuit (20), wherein the control unit (36) comprises a phase shifter (34) and a pulse generator (32) connected thereto which, in turn, is connected with the control inputs (30) of the transistors (22,24,26,28) of the transistor full-bridge driver circuit,

- a transformer (46) comprising a primary and a secondary winding (44,48) and a magnetic coupling element (50) for magnetically coupling the primary and the secondary winding (44,48),
- a primary oscillating circuit (38), with a resonance frequency and a quality factor, connecting the output of the transistor full-bridge driver circuit (20) with the primary winding (44) of the transformer (46), wherein the primary winding (44) of the transformer (46) forms part of the primary oscillating circuit (38), and the primary oscillating circuit (38), together with the transistor full-bridge driver circuit (20), the connecting lines and the primary winding (44) of the transformer (46), comprises at least one capacitor and at least one inductor,
- an output-side rectifier circuit (57) comprising an input and an output,
- a secondary oscillating circuit (52), with a resonance frequency and a quality factor, connecting the secondary winding (48) of the transformer (46) and the input of the output-side rectifier circuit (57), wherein the secondary winding (48) of the transformer (46) forms part of the secondary oscillating circuit (52), and the secondary oscillating circuit (52), together with the rectifier circuit (57), the connecting lines and the secondary winding (48) of the transformer (46), comprises one capacitor and one inductor, and wherein the resonance frequency of the primary oscillating circuit (38) is substantially equal to the resonance frequency of the secondary oscillating circuit (52), and the quality factor of the primary oscillating circuit (38) is adapted to the quality factor of the secondary oscillating circuit (52) for minimizing the difference therebetween,
- an output-side low-pass filter (62) comprising an inductor (64) and a capacitor (66),
- wherein the inductors (16,64) of the low-pass filters (14,62) are magnetically decoupled,
- a current and/or voltage sensor (58) connected between the output-side rectifier circuit (57) and the output-side low-pass filter (62) and supplying a galvanically decoupled output signal to the phase shifter (34) of the control unit (36), wherein
- the control unit (36) and the transistor full-bridge driver circuit (20) are configured as circuits integrated in a first die (70), and the output-side rectifier circuit (57) and the current and/or voltage sensor (58) are configured as circuits integrated in a second die (72),
- the first and the second die (70,72) are arranged on a circuit board (68) including the remaining circuit elements of the low-pass filters (14,62) of the primary and the secondary oscillating circuit (38,52) and connecting lines whose length and configuration are selected in view of defining the resonance frequency and the quality factor of the two oscillating circuits (38,52), and

- the inductors (16,64) of the low-pass filters (14,62) are configured as magnetically decoupled parts (88,90) of the housing (86).

3. Device according to claim 2, **characterized in that** for galvanically decoupling the output signal of the current and/or voltage sensor (58) an optocoupler (60) is provided.

4. Device according to one of claims 1 to 3, **characterized in that** all remaining circuit elements are arranged inside the housing (86).

5. Device according to one of claims 1 to 4, **characterized in that** the inductors (16,64) of the low-pass filters (14,62) and the magnetic coupling element (50) of the transformer (46) comprise ferromagnetic materials and in particular ferrites.

6. Device according to one of claims 1 to 5, **characterized in that** the pulse generator (32) generates Dirac-shaped, Gaussian function-shaped, e-function-shaped or cosine-square-function-shaped pulses for driving the transistor full-bridge driver circuit (20).

7. Device according to one of claims 1 to 6, **characterized in that** the drive pulses of the pulse generator (32) have a frequency of several kHz, in particular more than 500 kHz, and preferably in the MHz range.

8. Device according to one of claims 1 to 7, **characterized in that** the transformer (46) is configured as a planar transformer and comprises two windings (44,48) configured as helical circuit paths on the or a circuit board (68), said windings (44,48) crossing the magnetic coupling element (50) and in particular penetrating the magnetic coupling element (50) configured as a ring.

9. Device according to one of claims 1 to 8, **characterized in that** the circuit board (68) is flexible and comprises two ends (82,84) projecting beyond the magnetic coupling element (50), said ends (82,84) comprising at opposite sides of the circuit board (68) the first and the second die (70,72) and other electrical components, and being counter-concurrently placed around the magnetic coupling element (50).

10. Device according to claim 8 and 9, **characterized in that** the one helical winding is arranged on the one side and the other helical winding is arranged on the other side (74,76) of the circuit board (68).

11. Device according to one of claims 1 to 10, **characterized in that** on the input side a rectifier circuit (12) is provided whose output is connected with the input-side low-pass filter (14).

12. Device according to one of claims 1 to 11, **characterized in that** the phase shifter (34) of the control unit (36) comprises an output (78) and an input (80) for connection with the phase shifter (34) of the control unit (36) of at least one further switched-mode power supply unit.

13. Device according to one of claims 1 to 12, **characterized in that** the primary oscillating circuit (38) comprises two series-connected inductors (40,41) whose common node is connected with the capacitor (42).

14. Device according to one of claims 1 to 13, **characterized in that** a plurality of switched-mode power supply units (10,10') are provided which are connected in parallel and/or in series at the input and/or output side, and whose control units (36) are interconnected for the purpose of common and inter-coordinated control of the transistor full-bridge driver circuits (20).

## Revendications

1. Dispositif pour transformer une tension primaire en une tension secondaire, comportant au moins une partie de réseau commutée (10,10'), qui comporte

- un boîtier (86),
- un filtre passe-bas (14) situé côté entrée et comportant une inductance (16) et une capacité (18),
- un circuit d'attaque (20) à pont complet de transistors comportant une entrée reliée au filtre passe-bas (14) et une sortie;
- une unité de commande (36) pour commander le circuit d'attaque (20) à pont complet de transistors, l'unité de commande (36) comportant un déphaseur (34) et un générateur d'impulsions (32) relié à ce dernier et qui pour sa part est relié aux entrées de commande (30) des transistors (22,24,26,28) du circuit d'attaque à pont complet de transistors,
- un transformateur (46) comportant un enroulement primaire et un enroulement secondaire (44,48) et un élément de couplage magnétique (50) servant à réaliser le couplage magnétique de l'enroulement primaire et de l'enroulement secondaire (44,48),
- un circuit oscillant primaire (38), qui est relié à la sortie du circuit d'attaque (20) à pont complet de transistors à l'enroulement primaire (44) du transformateur (46), avec une fréquence de résonance et un facteur de qualité, l'enroulement primaire (44) du transformateur (46) faisant partie du circuit oscillant primaire (38), et le circuit oscillant primaire (38) possédant avec inclusion du circuit d'attaque (20) à pont complet de transistors, des lignes de liaison et de l'enroulement primaire (44) du transformateur (46), au moins une capacité et au moins une inductance,

- un circuit redresseur (57) situé côté sortie comportant une entrée et une sortie,
- un circuit oscillant secondaire (52), qui relie l'enroulement secondaire (48) du transformateur (46) et l'entrée du circuit redresseur (57) côté sortie, avec une fréquence de résonance et un facteur de qualité, dans lequel l'enroulement secondaire (48) du transformateur (46) fait partie du circuit oscillant secondaire (52) et le circuit oscillant secondaire (52) possède, avec inclusion du circuit redresseur (57), des lignes de liaison et de l'enroulement secondaire (48) du transformateur (46), une capacité et une inductance, et dans lequel la fréquence de résonance du circuit oscillant primaire (38) est égale essentiellement à la fréquence de résonance du circuit oscillant secondaire (52) et le facteur de qualité du circuit oscillant primaire (38) est adapté au facteur de qualité du circuit oscillant secondaire (52) pour réduire la différence entre les deux,
- un filtre passe-bas (62) situé côté sortie et comportant une inductance (64) et une capacité (66),
- les inductances (16,64) du filtre passe-bas (14,62) étant découplées magnétiquement,
- un capteur de courant et/ou de tension (58), qui est connecté à un circuit oscillant primaire et délivre un signal de sortie au déphaseur (34) de l'unité de commande (36),
- dans lequel l'unité de commande (36), le circuit d'attaque (20) à pont complet de transistors et le capteur de courant et/ou de tension (58) sont agencés sous la forme de circuits intégrés sur un premier dé (70), le circuit redresseur (57) est agencé sous la forme d'un circuit intégré sur un second dé (72),
- les premier et second dés (70,72) sont disposés sur une plaquette à circuits imprimés (68), qui comporte les autres éléments de circuit des filtres passe-bas (14,62) du circuit oscillant primaire et du circuit oscillant secondaire (38,52), et des lignes de liaison, dont la longueur et l'agencement sont choisis pour la définition de la fréquence de résonance du facteur de qualité des deux circuits oscillants (38,52),

- les inductances (16,64) du filtre passe-bande (14,62) sont agencées sous la forme de pièces découplées magnétiquement (88,90) du boîtier (86).

2. Dispositif pour la transformation d'une tension primaire en une tension secondaire, comportant au moins une partie de réseau commutée, qui comprend

- un boîtier (86),
- un filtre passe-bas (14) situé côté entrée et comportant une inductance (16) et une capacité (18),
- un circuit d'attaque (20) à pont complet de transistors comportant une entrée reliée au filtre passe-bas (14) et une sortie;
- une unité de commande (36) pour commander le circuit d'attaque (20) à pont complet de transistors, l'unité de commande (36) comportant un déphaseur (34) et un générateur d'impulsions (32) relié à ce dernier et qui pour sa part est relié aux entrées de commande (30) des transistors (22,24,26,28) du circuit d'attaque à pont complet de transistors,
- un transformateur (46) comportant un enroulement primaire et un enroulement secondaire (44,48) et un élément de couplage magnétique (50) servant à réaliser le couplage magnétique de l'enroulement primaire et de l'enroulement secondaire (44,48),
- un circuit oscillant primaire (38), qui est relié à la sortie du circuit d'attaque (20) à pont complet de transistors à l'enroulement primaire (44) du transformateur (46), avec une fréquence de résonance et un facteur de qualité, l'enroulement primaire (44) du transformateur (46) faisant partie du circuit oscillant primaire (38), et le circuit oscillant primaire (38) possédant, avec inclusion, du circuit d'attaque (20) à pont complet de transistors, des lignes de liaison et de l'enroulement primaire (44) du transformateur (46), au moins une capacité et au moins une inductance,
- un circuit redresseur (57) situé côté sortie comportant une entrée et une sortie,
- un circuit oscillant secondaire (52), qui relie l'enroulement secondaire (48) du transformateur (46) et l'entrée du circuit redresseur (57) côté sortie, avec une fréquence de résonance et un facteur de qualité, dans lequel l'enroulement secondaire (48) du transformateur (46) fait partie du circuit oscillant secondaire (52) et le circuit oscillant secondaire (52) possède, avec inclusion du circuit redresseur (57), des lignes de liaison et de l'enroulement secondaire (48) du transformateur (46), au moins une capacité et au moins une inductance, et dans lequel la fréquence de résonance du circuit oscillant primaire (38) est égale essentiellement à la fréquence de résonance du circuit oscillant secondaire (52) et le facteur de qualité du circuit oscillant primaire (38) est adapté au facteur de qualité du circuit oscillant secondaire (52) pour réduire la différence entre les deux,

- un filtre passe-bas (62) situé côté sortie et comportant une inductance (64) et une capacité (66),
- les inductances (16,64) du filtre passe-bas (14,62) étant découplées magnétiquement,
- un capteur de courant et/ou de tension (58), qui est connecté entre le circuit redresseur (57) du côté sortie et le filtre passe-bas (62) situé côté sortie et qui fournit d'une manière découplée galvaniquement un signal de sortie au déphaseur (34) de l'unité de commande,
- lequel l'unité de commande (36) et le circuit d'attaque (20) à pont complet de transistors sont réalisés sous la forme de circuits intégrés sur un premier dé (70), et le circuit redresseur (57) situé côté sortie et le capteur de courant et/ou de tension (58) sont réalisés sur un circuit intégré sur le second dé (72),
- les premier et second dés (70,72) sont disposés sur une plaquette à circuits imprimés (68), qui possède des autres éléments de circuit des filtres passe-bas (14,62) des circuits oscillants primaire et secondaire (38,52) et des lignes de liaison, dont la longueur et l'agencement sont choisis pour la définition de la fréquence de résonance du facteur de qualité des deux circuits oscillants (38,52),
- les inductances (16,64) des filtres passe-bas (14,62) sont agencées sous la forme de pièces découplées magnétiquement (88,90) du boîtier (86).

3. Dispositif selon la revendication 2, **caractérisé en ce que** pour le découplage galvanique du signal de sortie du capteur de courant et/ou de tension (58) il est prévu un optocoupleur (60).

4. Dispositif selon l'une des revendications 1 à 3, **caractérisé en ce que** tous les autres éléments de circuit sont disposés à l'intérieur du boîtier (86).

5. Dispositif selon l'une des revendications 1 à 4, **caractérisé en ce que** les inductances (16,64) des filtres passe-bas (14,62) et l'élément de couplage magnétique (50) du transformateur (46) comportent des matériaux ferromagnétiques et notamment des ferrites.

6. Dispositif selon l'une des revendications 1 à 5, **caractérisé en ce que** le générateur d'impulsions (32) produit des impulsions en forme d'impulsions de Dirac, d'impulsions de fonction gaussienne, d'impulsions de fonction e ou des impulsions en forme de fonction en cosinus carré pour la commande du circuit d'attaque (20) à pont complet de transistors.

7. Dispositif selon l'une des revendications 1 à 6, **caractérisé en ce que** les impulsions de commande du générateur d'impulsions (32) possèdent une fréquence de plusieurs kHz, notamment supérieure à 500 kHz et de préférence dans la gamme des MHz.

8. Dispositif selon l'une des revendications 1 à 7, **caractérisé en ce que** le transistor (46) est agencé sous la forme d'un transformateur planar et comporte deux enroulements (44,48) agencés sous la forme de voies conductrices de forme spiralée situées sur la ou une plaquette à circuits imprimés (68) et qui croisent l'élément de couplage magnétique (50) et traversent notamment l'élément de couplage magnétique (50) agencé sous la forme d'un anneau.

9. Dispositif selon l'une des revendications 1 à 8, **caractérisé en ce que** la plaquette à circuits imprimés (68) est flexible et comporte deux extrémités (82,84), qui font saillie au-delà de l'élément de couplage magnétique et qui, sur des faces réciproquement opposées de la plaquette à circuits imprimés (68), comportent des premier et second dés (70,72) ainsi que d'autres composants électriques et sont disposés en sens opposé autour de l'élément de couplage magnétique (50).

10. Dispositif selon l'une des revendications 8 et 9, **caractérisé en ce que** l'enroulement spiralé est disposé sur l'une des faces (74,76) de la plaquette à circuits imprimés (68) et l'autre enroulement spiralé est disposé sur l'autre des faces de la plaquette à circuits imprimés.

11. Dispositif selon l'une des revendications 1 à 10, **caractérisé en ce qu'**il est prévu côté entrée un circuit redresseur (12), dont la sortie est reliée au filtre passe-bas (14) situé côté entrée.

12. Dispositif selon l'une des revendications 1 à 11, **caractérisé en ce que** le déphaseur (34) de l'unité de commande (36) possède une sortie (78) et une entrée (80) destinées à être reliées au déphaseur (34) de l'unité de commande (36) au moins d'une autre partie de réseau commutée.

13. Dispositif selon l'une des revendications 1 à 12, **caractérisé en ce que** le circuit oscillant primaire (38) comporte deux inductances (40,41) branchées en série, dont les noeuds de circuit communs sont reliés à la capacité (42).

**14.** Dispositif selon l'une des revendications 1 à 13, **caractérisé en ce qu'**il est prévu plusieurs parties de réseau commutées (10,10'), qui sont branchées côté entrée et/ou côté sortie en parallèle et/ou en série et dont les unités de commande (36) sont reliées entre elles pour exécuter des commandes communes et accordées l'une sur l'autre du circuit d'attaque (20) à pont complet de transistors.

Fig.1

Puls-generator

Phasen-schieber

Sensor

von $R_x$

zu $R_y$

Fig.2

Fig.3

50     72     76

84

82

74

70

Fig.4

88     72     90

86

70

50

Fig.5

Fig.6